# EUROPÄISCHE PATENTANMELDUNG

(11) **EP 3 278 961 A1**
(43) Veröffentlichungstag der Anmeldung: **07.02.2018**
(21) Anmeldenummer: 16182777.9
(22) Anmeldetag: 04.08.2016
(51) Int. Cl.: B29C 67/00, B29C 47/80, B33Y 30/00

(54) **EXTRUDER ZUM HERSTELLEN EINES ERZEUGNISSES MITTELS SCHMELZSCHICHTUNG**

(71) Anmelder: Siemens Aktiengesellschaft, 80333 München (DE)
(72) Erfinder: Dürr, Matthias, 90473 Nürnberg (DE)

(57) **Zusammenfassung**

Die Erfindung betrifft einen Extruder (2) zum Herstellen eines Erzeugnisses mittels Schmelzschichtung, umfassend einen Extruder-Körper (4) mit einer Eintrittsöffnung (8) für ein Filament (6) und einer Austrittsöffnung (10) für eine Filament-Schmelze (7). Eine hohe thermische Flexibilität beim Aufheizen des Filaments (6) wird erreicht, indem der Extruder-Körper (4) eine Strahlungsheizung (16) zum Schmelzen des Filaments aufweist.

## Beschreibung

Die Erfindung betrifft einen Extruder zum Herstellen eines Erzeugnisses mittels Schmelzschichtung. Die Erfindung betrifft weiterhin ein Verfahren zum Herstellen eines Erzeugnisses mit Hilfe eines solchen Extruders sowie eine Steuervorrichtung zum Durchführen des Verfahrens.

Für die Technologie Fused Deposition Modeling (FDM, auch als Schmelzschichtung bezeichnet) werden zum Herstellen von Erzeugnissen Extruder eingesetzt, welche einen in Form von Filament zugeführten thermoplastischen Kunststoff aufschmelzen und als Schmelzestrang für den Aufbau von Werkstücken zur Verfügung stellen. Dies wird üblicherweise durch eine Schmelzkammer in einem Metallkörper realisiert, in die das Filament unter Druck eingespeist wird. Der Metallkörper wird durch eine geregelte elektrische Widerstandsheizung beheizt, wobei Wärme durch Wärmeleitung von den Kammerwänden auf das Schmelzgut übertragen wird. Die Schmelze wird anschließend durch eine Düse gerichtet nach außen abgeführt.

Die rasche Verfügbarkeit von Schmelze mit geringer Viskosität (entspricht hoher Temperatur) ist für einen Prozess wie FDM essenziell. Problematisch am oben beschriebenen Vorgang ist jedoch, dass das Schmelzen des Kunststoffs zwar zwingend erforderlich ist, hohe Temperaturen das Material jedoch schädigen (Zersetzungsprozesse, Aufbrechen der Polymerketten). Dies bedeutet, dass unter diesem Aspekt die Verweildauer des Kunststoffs bei hohen Temperaturen möglichst kurz gehalten und die Temperaturüberhöhung gegenüber der Schmelztemperatur möglichst gering gehalten werden muss.

Bei FDM wird die Schmelze mit hoher Dynamik extrudiert, d.h. in einem Moment ist z.B. ein hoher Massenstrom für den raschen Aufbau des Werkstücks gefragt, im nächsten eine Sequenz kleiner, diskreter Mengen für filigrane Details, schließlich wird bei reinen Positioniervorgängen oder Druckpausen ein kleiner Teil der Schmelze zurückgesaugt und dann die Förderung gestoppt.

Aufgrund der hohen thermischen Trägheit des Metallkörpers ist eine dem Prozess angemessene dynamische Anpassung der zugeführten Wärmeleistung kaum möglich. Die Temperaturreglung hält den Metallkörper im Mittel auf einer Solltemperatur von z.B. 220°C für das thermoplastische Material (z.B. Polylactide), unabhängig davon, ob und wie viel der Extruder fördert. Damit kommt es z.B. bei längeren Pausen oder Druckvorgängen mit sehr geringem Materialdurchsatz zu einer Schädigung des Kunststoffs, die sich z.B. in einer zunehmenden Verstopfung der Düse, Blasenbildung oder einer Verfärbung des Kunststoffs äußern kann.

Das Problem wird bisher durch Kompromisse bei der Größe des Metallkörpers, der Wahl der Temperatur und der konstruktiven Auslegung des Extruders begrenzt. Diese Kompromisse schränken jedoch die Nutzung der Möglichkeiten der FDM-Technologie ein.

Der Erfindung liegt die Aufgabe zugrunde, eine Herstellung eines Erzeugnisses mittels Schmelzschichtung mit einer hohen thermischen Flexibilität zu ermöglichen.

Die Aufgabe wird erfindungsgemäß gelöst durch einen Extruder zum Herstellen eines Erzeugnisses mittels Schmelzschichtung, umfassend einen Extruder-Körper mit einer Eintrittsöffnung für ein Filament und einer Austrittsöffnung für eine Filament-Schmelze, wobei der Extruder-Körper eine Strahlungsheizung zum Schmelzen des Filaments aufweist.

Die Aufgabe wird weiterhin erfindungsgemäß gelöst durch ein Verfahren zum Herstellen eines Erzeugnisses mit Hilfe eines Extruders nach einem der vorhergehenden Ansprüche, wobei das Filament durch den Extruder-Körper geführt wird und wobei im Extruder-Körper das Filament durch eine Strahlungsheizung geschmolzen wird.

Die Aufgabe wird schließlich erfindungsgemäß gelöst durch eine Steuervorrichtung zum Durchführen des Verfahrens.

Die in Bezug auf den Extruder nachstehend angeführten Vorteile und bevorzugten Ausgestaltungen lassen sich sinngemäß auf das Verfahren und die Steuervorrichtung übertragen.

Bei einer Strahlungsheizung erhitzt sich eine von elektrischem Strom durchflossene Heizwendel oder ein Heizstab und strahlt dadurch Wärme in Form von Infrarotstrahlen ab. Beispiele für eine elektrische Strahlungsheizung sind Halogenstrahler oder Infrarotheizungen.

Die Erfindung basiert auf der Idee, das Prinzip der elektrischen Strahlungsheizung, auch Wärmewellenheizung genannt, in der Domäne des 3D-Drucks zu implementieren, d.h. das Filament durch Wärmestrahlung, und nicht wie bisher durch Wärmeleitung, aufzuwärmen und aufzuschmelzen. Dabei werden die Vorteile der elektrischen Strahlungsheizung, nämlich eine sehr geringe thermische Trägheit und eine gute elektrische Steuerbarkeit, genutzt.

Gemäß einer bevorzugten Ausgestaltung weist die Strahlungsheizung einen linienförmigen Strahler auf, der sich parallel zum Filament erstreckt. Für die Übertragung der Strahlungsleistung auf das Filament wird der Umstand genutzt, dass das Filament wie auch ein Heizfaden oder Heizstab der Strahlungsquelle linienförmig ausgestaltet sind, so dass eine gezielte Energieübertragung in Längsrichtung des Filaments erfolgt.

Gemäß einer weiteren bevorzugten Ausgestaltung umfasst der Extruder-Körper einen Hohlraum für den Filament und die Strahlungsheizung, wobei der Hohlraum einen elliptischen Querschnitt aufweist und das Filament durch den einen Brennpunkt der Ellipse verläuft und die Strahlungsheizung im zweiten Brennpunkt der Ellipse positioniert ist. Unter Nutzung des Effekts der Projektion bzw. Bündelung durch Parabolspiegel, wird hierbei die Leistung vom Brennpunkt einer ersten Parabel in den Brennpunkt einer daran anschließenden Parabel übertragen, wodurch das Filament besonders effizient aufgeheizt wird.

Vorzugsweise umfasst der Extruder einen Temperatursensor, der auf einer Linie mit dem Filament und der Strahlungsheizung liegt, wobei das Filament zwischen dem Temperatursensor und der Strahlungsheizung positioniert ist. Eine solche Anordnung ist besonders vorteilhaft für eine möglichst genaue Temperaturmessung, da der Temperatursensor im Schatten des Filaments liegt, so dass keine direkte Strahlung der Strahlungsheizung den Temperatursensor erreicht. Das Temperatursignal ist dabei besonders geeignet für die Verwendung bei der Regelung des Herstellungsprozesses.

Bevorzugt ist zur Führung des Filaments durch den Extruder-Körper ein Rohr vorgesehen, welches insbesondere für die Strahlen der Strahlungsheizung zumindest teilweise transparent ist. Mit Hilfe des Rohrs wird das Filament sicher durch den Extruder-Körper geführt, ohne dabei seine Form oder Dicke zu verändern. Das Rohr ist beispielsweise aus Quarzglas, welches durchlässig für die Wellen der Strahlungsheizung ist, so dass das Filament auf besonders effiziente Weise aufgeheizt wird.

Zweckdienlicherweise ist die Strahlungsheizung als ein Halogenstab-Strahler ausgebildet. Mit Hilfe des Halogenstab-Strahlers wird die Temperatur des Filaments besonders schnell variiert.

Im Hinblick auf eine einfache Formgebung bei der Herstellung des Extruder-Körpers ist der Extruder-Körper durch zumindest einen metallischen Werkstoff gebildet. Bei einem Extruder-Körper aus Metall lässt sich insbesondere der Hohlraum leicht formen. Alternativ sind Extruder-Körper aus keramischen Werkstoffen auch denkbar.

Ein Ausführungsbeispiel der Erfindung wird anhand einer Zeichnung näher erläutert. Hierin zeigen:
- FIG 1: einen Längsschnitt durch einen Extruder für Schmelzschichtung, und
- FIG 2: einen Querschnitt durch den Extruder gemäß FIG 1.

Gleiche Bezugszeichen haben in den Figuren die gleiche Bedeutung.

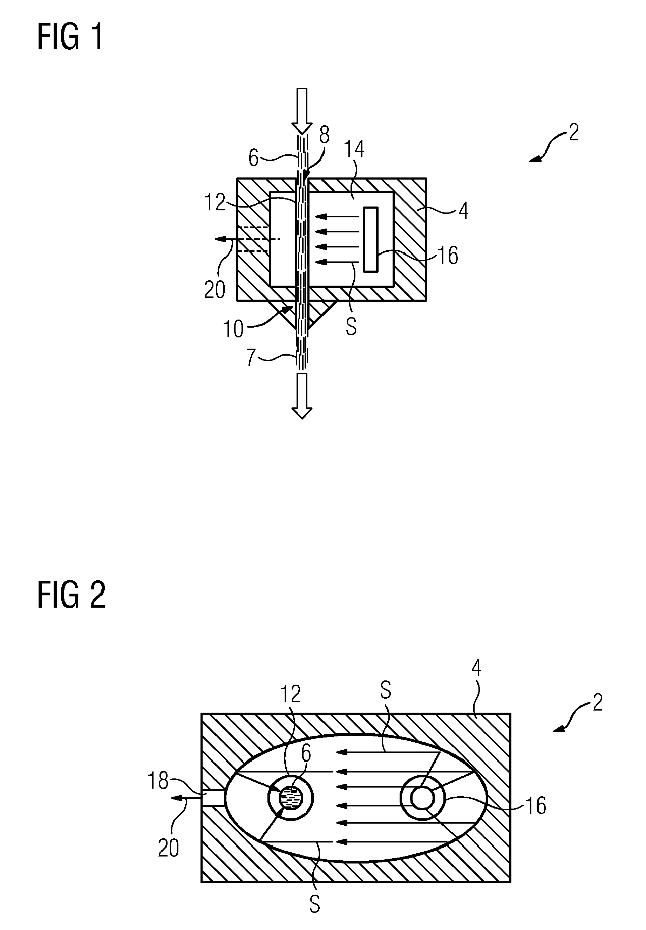

In FIG 1 und FIG 2 ist ein Extruder 2 für Fused Deposition Modeling (FDM) gezeigt, der einen Extruder-Körper 4 aus einem metallischen Werkstoff aufweist. Zum Einführen eines Filaments 6 ist am Extruder-Körper 4 eine Eintrittsöffnung 8 vorgesehen. Der Eintrittsöffnung 8 gegenüberliegend ist am Extruder-Körper 4 eine Austrittsöffnung 10 für eine Filament-Schmelze 7 angebracht, die als eine Düse ausgebildet ist. Zwischen der Eintrittsöffnung 8 und der Austrittsöffnung 10 erstreckt sich ein Rohr 12 aus Quarzglas, in welchem das Filament 6 durch den Extruder-Körper 4 geführt wird.

Der Extruder-Körper 4 umfasst einen Hohlraum 14, der im Querschnitt betrachtet eine elliptische Form aufweist, die aus FIG 2 ersichtlich ist. Im Brennpunkt der Ellipse verläuft das Rohr 12 mit dem Filament 6. Im zweiten Brennpunkt des elliptischen Hohlraums 14 ist eine elektrische Strahlungsheizung 16 positioniert, die im gezeigten Ausführungsbeispiel ein linienförmiger Halogenstab-Strahler ist. Der Halogenstab-Strahler 16 verläuft parallel zum Filament 6.

Beim Extruder 2 wird das Prinzip eines doppelten Parabolspiegels genutzt, um die Strahlen S des Halogenstab-Strahlers 16 gebündelt auf das Filament 6 zu richten. Hierzu reflektieren die Wände des Hohlraums 14 durch die Wahl deren Geometrie und deren Oberfläche die Strahlen S des Halogenstab-Strahlers 16 derart, dass die Strahlen S schließlich auf den ersten Brennpunkt fokussiert sind, in welchem sich das Filament 6 befindet. Es erfolgt somit ein besonders effizientes Aufschmelzen des Filaments 6, wobei aufgrund der Eigenschaften der Strahlungsheizung 16 die Temperatur des Filaments 6 schnell variiert werden kann.

Auf einer Linie mit dem Halogenstab-Strahler 16 und dem Filament 6 ist im Schatten des Filaments 6 ein Temperatursensor 18 angebracht, welcher im Hinblick auf eine Regelung des Heizungsvorgangs des Filaments 6 die Temperatur im Hohlraum 14 erfasst und über eine Datenleitung 20 an eine hier nicht näher gezeigte Steuerungs- und Auswerteeinrichtung weiterleitet.

Mit dem Extruder 2 und der zugehörigen Sensorik zur Temperaturerfassung ist eine sehr schnelle und gezielte Temperaturführung des Filaments 6 möglich, so dass eine unnötige dauerhafte Erhitzung des Werkstoffs vermieden wird. Insbesondere ist durch die gute Regelbarkeit von Halogenstrahlern und deren hohe Leistungsdichte auch eine Leistungsüberhöhung zu Beginn des Erhitzens möglich. Aufgrund der hohen Dynamik wird das Erhitzen erst sehr kurz vor der eigentlichen Extrusion ermöglicht.

Bezüglich der Art der Strahlungsheizung sind auch alternative Lösungen denkbar, z.B. durch den Einsatz anderer Formen von Strahlung und Reflektoren, die auf die jeweiligen Eigenarten der zu verwendenden Filamente abgestimmt sind, z.B. Mikrowellenstrahlung für stark wasserhaltige Substanzen.

## Patentansprüche

1. Extruder (2) zum Herstellen eines Erzeugnisses mittels Schmelzschichtung, umfassend einen Extruder-Körper (4) mit einer Eintrittsöffnung (8) für ein Filament (6) und einer Austrittsöffnung (10) für eine Filament-Schmelze (7), wobei der Extruder-Körper (4) eine Strahlungsheizung (16) zum Schmelzen des Filaments (6) aufweist.

2. Extruder (2) nach Anspruch 1,
wobei die Strahlungsheizung (16) einen linienförmigen Strahler (16) aufweist, der sich parallel zum Filament (6) erstreckt.

3. Extruder (2) nach einem der vorhergehenden Ansprüche,
wobei der Extruder-Körper (4) einen Hohlraum (14) für das Filament (6) und die Strahlungsheizung (16) umfasst, wobei der Hohlraum (14) einen elliptischen Querschnitt aufweist und das Filament (6) durch den einen Brennpunkt der Ellipse verläuft und die Strahlungsheizung (16) im zweiten Brennpunkt der Ellipse positioniert ist.

4. Extruder (2) nach einem der vorhergehenden Ansprüche,
umfassend einen Temperatursensor (18), der auf einer Linie mit dem Filament (6) und der Strahlungsheizung (16) liegt, wobei das Filament (6) zwischen dem Temperatursensor (18) und der Strahlungsheizung (16) positioniert ist.

5. Extruder (2) nach einem der vorhergehenden Ansprüche,
wobei zur Führung des Filaments (6) durch den Extruder-Körper (4) ein Rohr (12) vorgesehen ist, welches insbesondere für die Strahlen (S) der Strahlungsheizung (16) zumindest teilweise transparent ist.

6. Extruder (2) nach einem der vorhergehenden Ansprüche,
wobei die Strahlungsheizung (16) als ein Halogenstab-Strahler ausgebildet ist.

7. Extruder (2) nach einem der vorhergehenden Ansprüche,
wobei der Extruder-Körper (4) durch zumindest einen metallischen Werkstoff gebildet ist.

8. Verfahren zum Herstellen eines Erzeugnisses mit Hilfe eines Extruders (2) nach einem der vorhergehenden Ansprüche, wobei das Filament (6) durch den Extruder-Körper (4) geführt wird und wobei im Extruder-Körper (4) das Filament (6) durch eine Strahlungsheizung (16) geschmolzen wird.

9. Steuervorrichtung zum Durchführen des Verfahrens nach Anspruch 8.
